Europäisches Patentamt

(19) European Patent Office

Office européen des brevets

(11) Veröffentlichungsnummer: **0 162 223**
**A1**

(12) # EUROPÄISCHE PATENTANMELDUNG

(21) Anmeldenummer: 85103284.7

(22) Anmeldetag: 21.03.85

(51) Int. Cl.⁴: **B 23 B 27/08**
**B 23 B 29/04**

(30) Priorität: 23.03.84 DE 3410779

(43) Veröffentlichungstag der Anmeldung:
27.11.85 Patentblatt 85/48

(84) Benannte Vertragsstaaten:
AT CH DE FR GB IT LI NL SE

(71) Anmelder: Keller, Werner
Im Krötenteich 2
D-6967 Buchen/Odenwald(DE)

(72) Erfinder: Keller, Werner
Im Krötenteich 2
D-6967 Buchen/Odenwald(DE)

(74) Vertreter: Hoeger, Stellrecht & Partner
Uhlandstrasse 14c
D-7000 Stuttgart 1(DE)

(54) Vorrichtung zur klemmenden Befestigung von Schneideinsätzen.

(57) Eine Vorrichtung zur klemmenden Befestigung von Schneideinsätzen in Ausnehmungen von Schneidenträgern weist eine im Schneidenträger (1) drehbar gelagerten Nocke (5) und ein am Schneidenträger vorgesehenes Spannglied (7,4,1) auf das durch die Nocke (5) an den Schneideinsatz (6) anpreßbar ist. Hierbei ist das Spannglied als ein freitragend im Schneidenträger befestigter Stift (7) ausgebildet. dessen feies Ende (8) durch die Nocke zum Schneideinsatz hin bewegbar ist. Zur Verbesserung der Spanabweisung ist vorgesehen, daß am freien Ende (8) des Stiftes (7) eine am Schneideinsatz (6) angreifende Spannplatte (41) angeordnet ist.

Fig. 1

EP 0 162 223 A1

Anmelder: Herr Werner Keller
Im Krötenteich 2
6967 Buchen/Odenwald

B e s c h r e i b u n g :

Vorrichtung zur klemmenden Befestigung
von Schneideinsätzen

Die Erfindung betrifft eine Vorrichtung zur klemmenden
Befestigung von Schneideinsätzen in Ausnehmungen von
Schneidenträgern mit einer im Schneidenträger drehbar
gelagerten Nocke und mit einem am Schneidenträger vorgesehenen Spannglied, das durch die Nocke an den
Schneideinsatz anpreßbar ist, wobei das Spannglied
als ein freitragend im Schneidenträger befestigter
Stift ausgebildet ist, dessen freies Ende durch die
Nocke zum Schneideinsatz hin bewegbar ist.

Bei einer früher vorgeschlagenen Vorrichtung
dieser Art (DE-OS 33 19 799) kann es beim
Ablauf der beim Abstechen oder Schneiden entstehenden
Späne zu Schwierigkeiten kommen. Außerdem muß dort
wegen der Anordnung der Nocke der Schneidenträger
gegenüber dem Schneideinsatz sehr breit ausgebildet
werden.

Es ist Aufgabe der Erfindung, eine gattungsgemäße Vorrichtung derart zu verbessern, daß bei schmalem Schneidenträger ein günstiger Spanablauf gewährleistet ist und insbesondere keine Späne zwischen Stift und Schneidplatte eingeklemmt werden.

Die Aufgabe wird erfindungsgemäß dadurch gelöst, daß am freien Ende des Stiftes eine am Schneideinsatz angreifende Spannplatte angeordnet ist, wobei die benachbarten Flanken von Schneideinsatz und Spannplatte zueinander komplementär ausgebildet sein und im wesentlichen ohne Zwischenraum formschlüssig ineinander eingreifen können.

Die nachstehende Beschreibung einer bevorzugten Ausführungsform der Erfindung dient im Zusammenhang mit beiliegender Zeichnung der weiteren Erläuterung. Es zeigen:

Fig. 1    in abgebrochener Darstellung einen Schneidenträger mit Schneideinsatz und Nocke und

Fig. 2    eine Teilschnittansicht entlang der Linie 2-2 in Fig. 1.

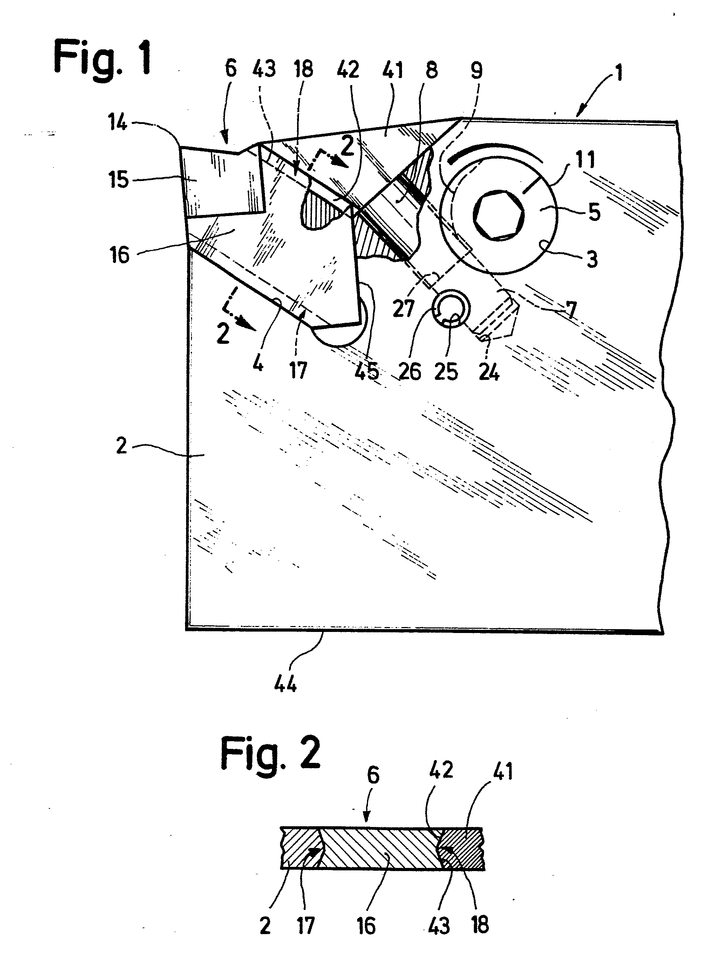

In Fig. 1 ist ein bei Drehmaschinen, insbesondere einer Drehbank, verwendbarer Schneidenträger 1 in Gestalt eines Abstechschaftes 2 dargestellt. Ein solcher Abstechschaft 2 dient zum Abschneiden oder Abstechen eines rotierenden, in ein Drehfutter der
Drehmaschine eingespannten Werkstücks. Die in Fig. 1
nach rechts hin abgebrochene Länge des Abstechschaftes 2 hängt von dem Durchmesser des durchzutrennenden Werkstückes ab. Diese Länge kann beispielsweise 1o bis 2o cm oder mehr betragen.

Im Abstechschaft 2 sind zwei miteinander in Verbindung
stehende Ausnehmungen vorgesehen, nämlich eine im
wesentlichen kreisrunde Ausnehmung 3 und eine im
wesentlichen rechteckige Ausnehmung 4. In die erste
Ausnehmung 3 ist eine Nocke 5, in die zweite Ausnehmung 4 ein das Werkstück zerspanender Schneideinsatz 6
einsetzbar. Weiterhin ist im Abstechschaft 2 ein als
Spannglied dienender Stift 7 freitragend befestigt,
dessen freies Ende 8 beim Verdrehen der als Exzenter
wirkenden Nocke 5 zum Schneideinsatz 6 hin bewegbar
ist.

Am freien Ende 8 des Stiftes 7 ist eine Spannplatte
41 von im wesentlichen dreieckiger Gestalt fest angeordnet, die mit einer Flanke 42 an der benachbarten
Flanke 43 des Schneideinsatzes 6 anliegt. Wird das
freie Ende 8 des Spannstiftes beim Verdrehen der
Nocke 5 zum Schneideinsatz 6 hin bewegt, preßt sich
die Flanke 42 der Spannplatte 41 gegen die benachbarte
Flanke 43 des Schneideinsatzes 6, so daß dieser im
Abstechschaft 2 festgeklemmt ist.

Wie aus Fig. 1 hervorgeht, liegt die Nocke 5 mit Bezug
auf die untere Kante 44 des Abstechschaftes 2 im
wesentlichen auf gleicher Höhe mit dem Schneideinsatz 6. Hierdurch kann der Abstechschaft 2 schmaler
als bisher ausgebildet sein und braucht gegenüber dem
Schneideinsatz nicht überhöht zu sein. Diese flache oder schmale
Ausbildung des Abstechschaftes 2 ermöglicht ein problemloses Ablaufen der vom Schneideinsatz 6 gebildeten
Späne über die freie Kante der Spannplatte 41 hinweg.

Wie aus Fig. 2 hervorgeht, sind die einander benach=
barten Flanken 42 und 43 von Spannplatte 41 bzw.
Schneideinsatz 6 zueinander komplementär (dreieckig)
ausgebildet und greifen im wesentlichen ohne Zwischenräume formschlüssig ineinander ein. Hierdurch ist
einerseits ein guter Halt zwischen Spannplatte 41 und
Schneideinsatz 6 gewährleistet und andererseits können
wegen der fehlenden Zwischenräume keine Späne zwischen
Spannplatte 41 und Schneideinsatz 6 eindringen.

Bei der bevorzugten Ausführungsform der Erfindung
werden der Stift 7 und die Spannplatte 41 einstückig,
vorteilhafterweise als Feingußteil ausgebildet.

Wie aus Fig. 1 hervorgeht, weist die Nocke 5 an ihrer
dem Stift 7 zugekehrten Seite eine Nut 9 variierender
Tiefe auf. Die Nutflanken umfassen dabei das freie
Ende 8 des Stiftes 7, so daß hierdurch die Nocke 5,
die an ihrer der Nut 9 gegenüberliegenden Seite eine
kreiszylindrische Fläche 11 besitzt, gleichzeitig in der Ausnehmung 3 verdrehbar gehalten und an einem
Herausfallen aus dem Abstechschaft 2 gehindert ist.
Da die Nut 9 der Nocke 5 eine variierende Tiefe hat,
wirkt der am freien Ende 8 des Stiftes angreifende
Nutgrund wie ein Exzenter, so daß sich beim Verdrehen
der Nocke die mit dem freien Ende 8 des Stiftes 7
fest verbundene Spannplatte 41 gegen den Schneideinsatz 6 klemmend anlegt. In ihrer Mitte weist die
Nocke 5 eine sechseckige, durchgehende Ausssparung 13
zum Einführen eines komplementär geformten Werkzeuges
auf, mit dessen Hilfe die Nocke im Abstechschaft verdreht werden kann.

Der Schneideinsatz 6 besteht bei der dargestellten
Ausführungsform aus zwei Teilen, nämlich einem die
eigentliche Schneidkante 14 tragenden Schneidteil 15
und einer Schneidplatte 16, auf welcher der Schneidteil 15 befestigt, beispielsweise aufgelötet ist.
Der Schneideinsatz 6 weist an seinen einander gegenüberliegenden Flanken oder Schmalseiten, wie bereits
erwähnt, keilförmige Nuten 17, 18 auf, wobei in die
Nut 17 ein dachartig abgeschrägter Vorsprung des Abstechschaftes 2 und in die Nut 18 die ebenfalls dachartig abgeschrägte Flanke 43 der Spannplatte 41 eingreift (Fig. 2). Hierdurch ist der Schneideinsatz 6
seitlich, d. h. senkrecht zur Zeichnungsebene der
Fig. 1 unverrückbar im Abstechschaft 2 gehalten. Eine
entsprechende formschlüssige Verbindung kann im
übrigen auch an der rückwärtigen Flanke oder Schmalseite 45 des Schneideinsatzes 6 vorgesehen sein.

Der Stift 7 ist in eine passende Bohrung 24 des Abstechschaftes 2 eingesetzt. Der Stift weist an seinem
unteren, im Abstechschaft 2 befindlichen Ende eine
Kerbe 25 auf, in die ein den Stift 7 axial im Abstechschaft 2 fixierendes Befestigungsmittel 26, beispielsweise eine Spannhülse, eingreift. Ab der in Fig. 1
dargestellten Linie 27 erweitert sich die Bohrung 24,
so daß ab da das Ende 8 des Stiftes 7 freitragend
verläuft.

Wesentlich bei der erfindungsgemäßen Anordnung ist,
daß sich wegen der "flachen" Ausbildung des Abstechschaftes 2 den an der Kante 14 entstehenden Spänen
beim Ablaufen kein Hindernis, beispielsweise in Gestalt
einer querliegenden Fläche, entgegenstellt. Wie aus
Fig. 1 ersichtlich, liegt die Schneidkante 14 praktisch
in gleicher Höhe wie die Oberkante des Abstechschaftes 2
und die freie Kante der Spannplatte 41 vermittelt
einen nahezu geradlinigen Übergang vom Schneidteil 15
in die Oberkante des Abstechschaftes 2.

Der im Voranstehenden beschriebene Schneidenträger 1
braucht nicht unbedingt als starrer Abstechschaft 2
ausgebildet sein. Vielmehr kommen auch Schneidenträger anderer Art in Frage, beispielsweise umlaufende
Bandsägeblätter sowie rotierende Fräser und Kreissägeblätter mit mehr als einem Schneideinsatz 6, wie
z.B. in der DE-OS 33 19 799 beschrieben und dargestellt.

Anmelder: Herr Werner Keller
Im Krötenteich 2
6967 Buchen/Odenwald

Patentansprüche :

1. Vorrichtung zur klemmenden Befestigung von Schneideinsätzen in Ausnehmungen von Schneidenträgern
mit einer im Schneidenträger drehbar gelagerten
Nocke und mit einem am Schneidenträger vorgesehenen
Spannglied, das durch die Nocke an den Schneideinsatz anpreßbar ist, wobei das Spannglied als ein
freitragend im Schneidenträger befestigter Stift
ausgebildet ist, dessen freies Ende durch die Nocke
zum Schneideinsatz hin bewegbar ist,
d a d u r c h   g e k e n n z e i c h n e t ,
daß am freien Ende (8) des Stiftes (7) eine am
Schneideinsatz (6) angreifende Spannplatte (41)
angeordnet ist.

2. Vorrichtung nach Anspruch 1, dadurch gekennzeichnet,
daß der Stift (7) und die Spannplatte (41) einstückig miteinander verbunden sind.

3. Vorrichtung nach Anspruch 1 oder 2, dadurch gekennzeichnet, daß die benachbarten Flanken (42,43) von
Schneideinsatz (6) und Spannplatte (41) zueinander
komplementär ausgebildet sind und im wesentlichen
ohne Zwischenraum formschlüssig ineinander eingreifen.

Fig. 1

Fig. 2

0162223

1/1

Europäisches
Patentamt

EUROPÄISCHER RECHERCHENBERICHT

0162223
Nummer der Anmeldung

EP 85 10 3284

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 205 558 (STIER) * Spalte 2, Zeilen 5-30; Figuren 1-4 * | 1,2 | B 23 B 27/08<br>B 23 B 29/04 |
| A | DE-A-3 133 029 (THE VALERON CORP.) * Seite 9, Zeile 21 - Seite 10, Zeile 9 * | 1 | |
| A | PATENT ABSTRACTS OF JAPAN, Band 7, Nr. 124, 28. März 1983, (M-218) (1269); & JP-A-58-40218 (SUMITOMO DENKI) 09-03-1983 | 1 | |
| A | SOVIET INVENTIONS ILLUSTRATED, Dervent Publications Ltd. Woche KO3, 2. März 1983 Sektion P54, Abstrakt Nr. A8838 & SU-A-908 542 (TOOL RES INST) 28-02-1982 | 1 | RECHERCHIERTE SACHGEBIETE (Int. Cl.4) |
| A | DE-U-1 981 681 (R. ZAPP WERKZEUG- UND MASCHINENFABRIK GMBH) * Anspruch 1; Figur 2 * | 1 | B 23 B 27/00<br>B 23 B 29/00<br>B 23 C 5/22<br>B 23 D 61/06 |
| D,P<br>A | DE-A-3 319 799 (W. KELLER) * Ansprüche 1,9; Figuren 1-3 * | 1,3 | |

Der vorliegende Recherchenbericht wurde für alle Patentansprüche erstellt.

| Recherchenort<br>BERLIN | Abschlußdatum der Recherche<br>21-06-1985 | Prüfer<br>MARTIN A E W |
|---|---|---|